Europäisches Patentamt

European Patent Office

Office européen des brevets

(19)

(11) Publication number: **0 146 285**
**A2**

(12) # EUROPEAN PATENT APPLICATION

(21) Application number: **84308211.6**

(22) Date of filing: **27.11.84**

(51) Int. Cl.⁴: **G 09 F 9/30**, G 02 F 1/133

(30) Priority: **16.12.83 GB 8333608**

(43) Date of publication of application: **26.06.85**
**Bulletin 85/26**

(84) Designated Contracting States: **AT BE CH DE FR IT LI LU NL SE**

(71) Applicant: **STANDARD TELEPHONES AND CABLES PUBLIC LIMITED COMPANY, 190 Strand, London, WC2R 1DU (GB)**

(72) Inventor: **Glover, John Alan, 603, Stonegate Road, Moortown, Leeds (GB)**

(74) Representative: **Dennis, Mark Charles, STC Patent Department Edinburgh Way, Harlow Essex CM20 2SH (GB)**

(54) **Electro optic flat panel display.**

(57) An electro optic display such as a liquid crystal display has four triangular pixels (p) in a group (G), the groups (G) being arranged on a 5 × 3 matrix. Electrical connection tracks (T) run only between groups (G) not through the groups. This enables bolder characters in a smaller character width for large area displays.

EP 0 146 285 A2

## ELECTRO OPTIC FLAT PANEL DISPLAY

This invention relates to electro optic flat panel displays, particularly but not exclusively liquid crystal displays.

The generation of alphanumeric characters by use of dot-matrices is a well-known and widely used technique, particularly in the computer field where large amounts of changing information have to be conveyed to the user via VDUs and printers. There is however a growing need to convey information to large groups of people, i.g. at airports, where dynamic displays giving up-to-the-minute information on aircraft movements are required. This need is largely met at the moment by electro-mechanical displays. However use of back-lit LCD cells displaying dot-matrix generated characters offer significant improvements in such areas as reliability, microcomputer control, flashing message etc. It is an object of the present invention to improve the form of characters displayed by such devices.

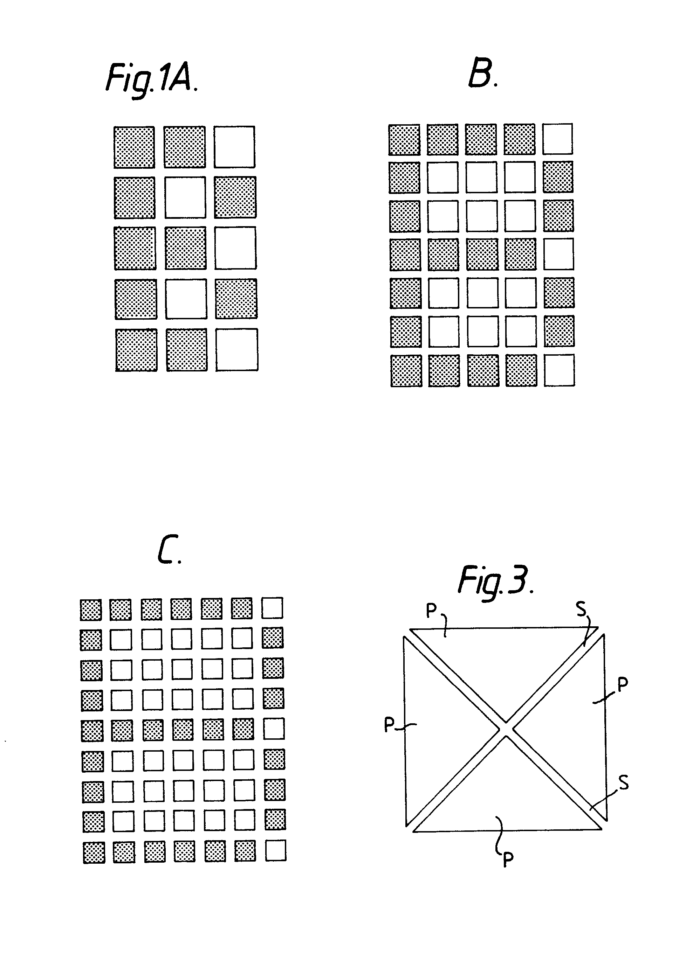

The principle of the dot-matrix display is to approximate to the shape of the required character by using a sufficient number of elements (pixels) to enable the eye of an observer to see the character as composed of continuous lines or curves. In traditional designs the pixels are disposed on a regular grid so as to give equal weight for generating shapes to all parts of the display area. In such a display, if the character size were progressively increased to make a large area sign, the eye becomes progressively more able to resolve the separate pixels, leading eventually to loss of character recognition. This can be countered by using a higher order matrix as shown in Fig. 1, and in fact most users of dot-matrix characters have followed this route through seven-by-five, nine-by-seven, eleven-by-nine and higher.

However, as Fig. 1 shows, one penalty paid for the improved character recognition is height to width aspect ratio. This ratio is 1.67 for the five-by-three matrix of Fig. 1A, 1.40 for the seven-by-five matrix of Fig. 1B, and only 1.29 for the nine-by-seven matrix of Fig. 1C. This determines the horizontal dimension required (once the character height is defined) and in many applications this can be critical. A fixed height message would, for example, be 25 per cent longer in nine-by-seven format than in five-by-three.

We currently manufacture large area liquid crystal displays in which the characters are formed in a nine-by-seven matrix. Each character is provided by an individual liquid crystal display device. These devices are direct drive devices and not multiplexed.

The connection tracks serving the individual sixty-three pixels (dots) are brought out to the vertical sides, 32 or thereabouts on one side and 31 or thereabouts on the other side. The tracks are connected to connection pins which project backwards and normal to the display major surfaces, and are mounted in a printed circuit board which has an aperture slightly larger than the area occupied by the sixty-three pixels so that the light can still pass through the display with no shadows.

The printed circuit board has tracks which extend the connections down to the top and bottom edge regions of the display device, where respective shift registers control the characters displayed in response to the data on a serial data bus feeding the shift registers in a row of displays in order to generate a message made up of the various characters.

It is an object of the present invention to provide a liquid crystal display with improved contrast for the same or even smaller size display, which is simpler and less expensive to incorporate with other similar display devices to form a large area display.

According to one aspect of the present invention there is provided an electro optic flat panel display device for providing an alpha-numeric character display, and comprising:

(a)      a first sheet having an inwardly facing surface;

(b)      a plurality of pixel-forming electrodes on said surface of substantially triangular shape;

(c)      a second sheet overlying the first sheet and having a common electrode overlying a plurality of said pixel-forming electrodes;

(d)      a perimeter seal securing together the sheets;

(e)      a liquid crystal material between the sheets;

(f)      characterised in that said pixel-forming electrodes ($\underline{p}$) are arranged in rectangular groups (G), there being four to a group, in that the groups (G) are arranged as a spaced apart dot matrix such that the spacing (S) between adjacent groups (G) is substantially greater than the gaps ($\underline{s}$) between adjacent electrodes ($\underline{p}$) of a group (G), whereby to produce the effect of a lower order matrix from a higher order one; in that connection tracks (T) are provided on said surface of said first sheet (1) extending from edge connections (2,3,4 and 5) of said first sheet (1) to individual electrodes ($\underline{p}$) and only between adjacent groups (G) of electrodes.

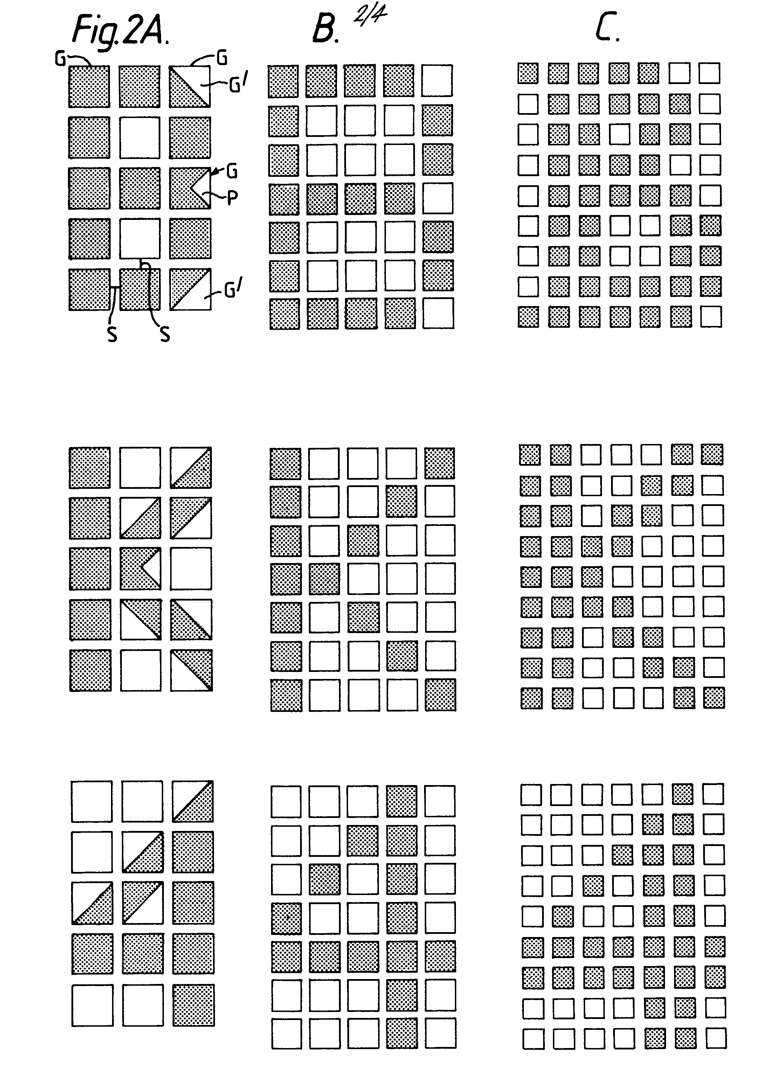

According to another aspect of the present invention there is provided a direct drive electro-optic flat panel display device providing a dot matrix display for alpha-numeric characters, characterised in that the matrix is five high by three wide (Fig. 2A), that each dot is rectangular and comprises a group (G) of triangular pixel-forming elements ($\underline{p}$), that the spaces (S) between the dots is substantially larger than the spaces ($\underline{s}$) between elements of a group, and that connection tracks extend from individual elements to edge regions of the device along routes which only pass through the spaces between the dots.

Conveniently two such displays can be provided side by side on a common substrate and spaced apart by an amount equal to the character spacing produced when two such devices are mounted side by side to form part of a large area display.

For a liquid crystal display such as a dyed nematic or a phase change type display, the size of each device for a large area display is about 85mm high and 65 mm wide, but where two such displays are provided on a common substrate the overall width is suitably about 104mm.

The present invention is very suitable for flat panel displays providing characters, having a height in the range 20mm to 100mm.

We have found good results are achieved where the group spacing is about 3mm and the pixel spacing within any group is about 0.2 or 0.3mm, i.e. the group spacing is about an order of magnitude larger than the individual pixel spacing within a group.

In order that the invention can be clearly understood reference will now be made to the accompanying drawings in which:-

Fig. 1 shows three conventional dot-matrix displays,

Fig. 2A shows three dot-matrix displays for devices according to an embodiment of the present invention in comparison with Figs. 2B and 2C which show conventional displays,

Fig. 3 shows the proposed pixel group for a display as shown in Fig. 2A,

Fig. 4 shows a double alphanumeric character display device on a single substrate and incorporating the display format of Fig. 2A, according to another embodiment of the invention,

Fig. 5 shows in detail the substrate and track lay-out for the display device of Fig. 2A according to an embodiment of the invention, and

Fig. 6 shows a back-lit large area display incorporating display devices of Fig. 4.

Fig. 1 has already been referred to in the preamble of the specification, and in the present invention it is proposed to provide a dot-matrix display device in which the pixels are not arranged on a regular grid but are so arranged in groups, the groups being on a regular grid, as to produce the effect of a low order matrix from a higher order matrix.

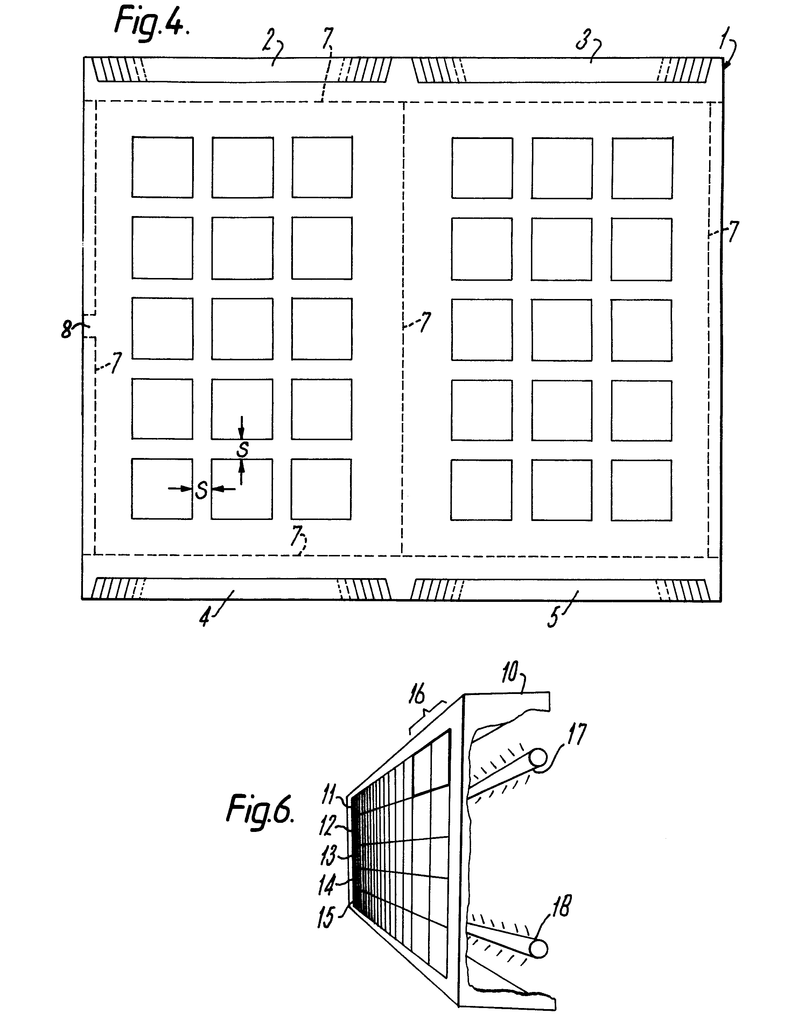

Referring to Fig. 2, column A shows the letters B, K and the number 4 on a dot-matrix display according to an embodiment of the present invention. Each character is formed by a five-by-three matrix with the pixels arranged in groups. Each group is rectangular in overall shape as shown in Fig. 3, but each pixel $\underline{p}$ is triangular in shape. In the embodiment described the spacing $\underline{s}$ between the adjacent pixels $\underline{p}$ within a group G is about 0.3mm. Although it could be smaller e.g. 0.2mm. It is to be understood that in the LCD described, in fact the black areas are represented by energised pixels of the display whereas white areas are pixels which are not energised, so that in reality the drawings shows a "negative" of the actual representation.

Referring to Fig. 2A the spacing S between adjacent groups G of pixels $\underline{p}$ is about 3mm. Thus the grid spacing S is about an order of magnitude larger than the individual pixel spacing $\underline{s}$ within a group. As shown in Fig. 2A two pixels $\underline{p}$ equivalent to half G' of the group G give the effect of a rounded corner for the letter B. Similarly a single pixel p midway down the back of the B and the two pixels G' at the bottom right hand corner of B all combine to give a bolder character than either of the two Bs shown in Fig. 2B and Fig. 2C in the top row. In Fig. 2C an attempt has been made on a nine-by-seven matrix to create a bolder B than the one shown on the right hand side of Fig. 1, but the relatively large number of pixels has effectively reduced the contrast so that this character lacks brightness and therefore boldness. This is because each pixel needs to be connected to a vertical edge connection terminal, as discussed earlier, and the routing for the conductive tracks extending between individual pixels on the one hand and the corresponding vertical edge connection terminals on the other hand, needs to be routed between the pixels. This results, as is demonstrated in the column of Fig. 2C, in having relatively large gaps between adjacent pixels so that the character losses brightness. Thus the gap between the pixels cannot be reduced proportionally where they are used as routes for electrical connections, as is the case in liquid crystal displays and most other flat panel electro optic displays. Furthermore the smaller pixels lead to loss of boldness (and therefore visibility) of the characters. These can be restored to some extent by using more than one line of pixels to make the character "thicker" as shown in the column of Fig. 2C but, as discussed above, the compromise is loss of overall brightness.

In contrast the displays shown in the column of Fig. 2A combine the advantages of both the higher order matrix because the larger number of pixels give a better shape, and the lower order matrix where the character is bolder and brighter.

As can be seen in the column of Fig. 2A the triangular pixels facilitate diagonal line and curve generation for use in forming the alphanumeric characters. Note that the display format in the column of Fig. 2A is described by its lower order designation i.e. five-by-three, since this is how it is primarily regarded by the observer.

Referring to Fig. 4, in a further embodiment of the present invention it is proposed to provide two side-by-side characters on a single substrate. A glass substrate 1 has groups 2 and 3 of edge connections at the top and further groups 4 and 5 of edge connections at the bottom. A sealing strip in the form of glass frit is illustrated diagrammatically by the dashed line 7. A second glass plate is sealed by this sealing strip 7 onto the substrate 1 with a defined gap between the two plates which is filled with a liquid crystal material. The second plate has a ground electrode overlying all the pixels of the substrate 1 and the field-effect when a signal is applied between the ground plane and any individual pixel of plate 1, causes a change in the polarisation properties of the liquid crystal material and thus a change in its transmissivity to light from behind the display. Thus the displays described in this patent specification are light transmissive devices but the invention can also be applied to light reflective devices where the substrate 1 acts as a light reflector (known as a front-lit display as opposed to a back-lit display). In particular the application of a signal to a pixel makes it light transmissive instead of opaque. The characters shown in the column of Fig. 2A should in truth show very fine white diagonal lines through each group G of pixels $p$ representing the spacing $s$ between adjacent pixels. However, it is also true to say that this spacing is so fine that at the normal distance of reading the display, these fine spacings $s$ will not in fact be visible.

The display is manufactured as follows:-

The glass substrate 1 and the front glass sheet (not shown) are secured together with the perimeter seal 7 to form an envelope for a layer of liquid crystal to be hermetically sealed within the cell. The cell is filled via an aperture 8 formed by an interruption in the perimeter of the seal 7 and, after the cell has been filled, this aperture is sealed off with a solder plug. Before the glass sheets are secured together, the inwardly facing surfaces of the two sheets are provided with transparent electrodes, e.g., by photolithography, defining the pixels p, and in particular in the embodiment of Fig. 4 there are two five-by-three matrices, each group of pixels forming the five-by-three matrix being divided into four triangular pixels as shown in Fig. 3. The surfaces are then either rubbed or have silicon monoxide vapour-deposited in a high vacuum evaporator at a controlled angle to cause the liquid crystal molecules to assume homogenous alignment when the cell is taken by cooling into a smectic phase or a less ordered non-smectic phase in the absence of any applied electric field.

Once the substrate 1 has been provided with its pattern of electrodes these electrodes may be covered, if desired, with an electrically insulating transparent barrier layer e.g. silicon dioxide to prevent direct electrical contact between the liquid display medium and the electrodes. Such a layer may for instance be of silica deposited by chemical vapour reaction of, for instance, silane with oxygen.

The substrate 1 is then assembled with its front glass plate with its ground plane etched on, and the two substrates are secured together with the edge seal 7 to form an envelope for the liquid crystal layer. The gap between the plates can be defined by tiny transparent fibres sprayed all over one of the surfaces. The resulting cell is filled with its liquid crystal medium by evacuating the cell and back-filling it through an aperture formed either by a hole in one of the substrates or by an interruption in the edge seal. As mentioned earlier this aperture is then hermetically sealed with, for example, a solder plug on a previously metallised aperture.

Alternative forms of sealing are possible but we have found that a glass frit sealing gives better hermeticity.

It is then necessary to provide edge connection pins to make contact with the edge connection terminals 2, 3, 4 and 5.

The process described is for a phase change display, but a dyed nematic device would for example also require a polariser; in this case such a polariser could be provided by using self-adhesive Polaroid (Trade Name) cut from a sheet.

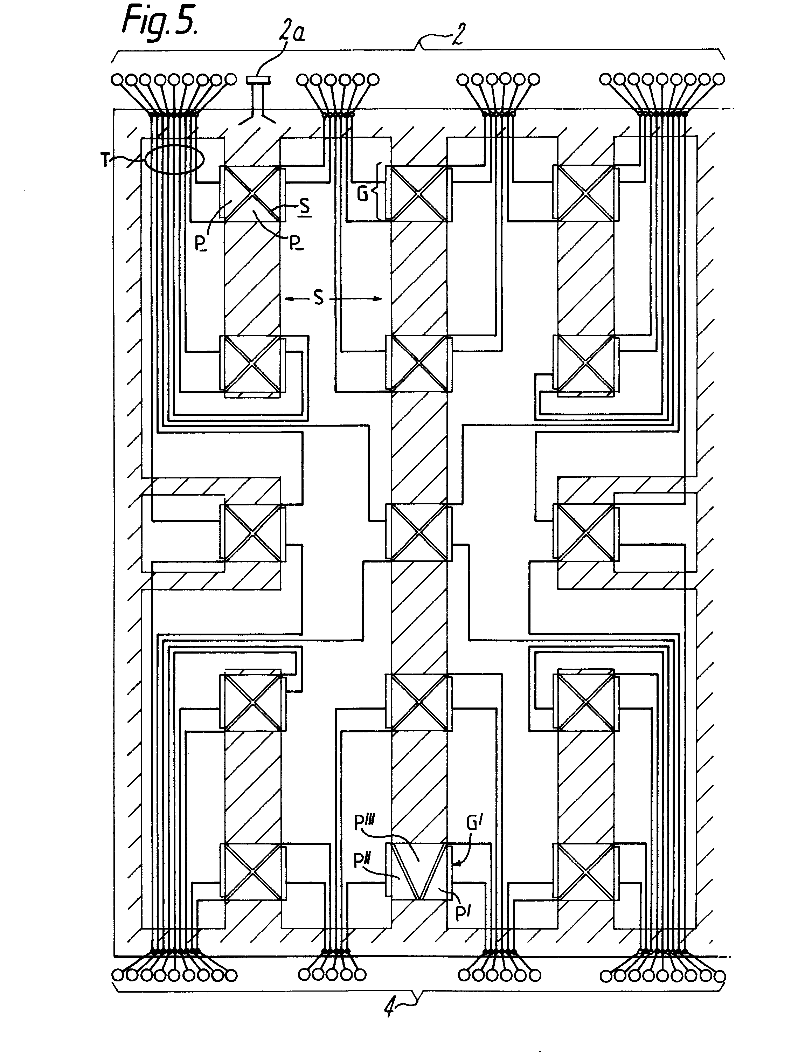

Referring to Fig. 5 a detailed lay-out of one of the matrix displays of the Fig. 4 embodiment is shown. In each character matrix display there are either sixty pixels thus requiring sixty edge connections, or in the advantageous modification shown in Fig. 5, there are fifty-nine pixels where the bottom middle group designated $G'$ comprises just three triangular pixels $p'$, $p''$ and $p'''$. The main purpose of this particular modification is to enable the bottom point of the V-character to have an overall height the same as other characters, by using the pixel $p'''$ for the bottom point of the character "V". Thirty of these connections extend to the upper edge connection terminals, such as those with the reference numeral 2 in Fig. 4 and the other thirty (or twenty nine) extend to the lower edge connection terminal 4 shown in Fig. 4.

As can be seen in Fig. 5 the larger gaps S of about 3mm between adjacent groups of pixels give adequate width for the conductive tracks T to extend from the individual pixels along to the horizontal edge connections 2 and 4. These conductive tracks T are formed with the pixel areas by photolithography and etching techniques. In the example shown there are on average seven conductive tracks emerging from the space between adjacent groups of pixels at the bottom and at the top of the display. In Fig. 5 the shaded area represents the back plane electrode and this is connected to edge connection 2a. In the embodiment described the spaces between the dots i.e. groups such as G, occupy about 31% of the display area, but it could be as high as 40% and still provide an improvement over the prior art, nine-by-seven matrix display.

One of the advantages of the display according to the present invention is that as much as 40% saving in the width of the character in comparison with a nine-by-seven display can be achieved without significant loss of definition in a large area display for viewing by a group of people.   A typical application of a large area display embodying a number of the devices described is for passenger information at terminals such as airports, railway stations, etc.   The device described in Fig. 4 would have typically a height of 85mm and an overall width of 104mm, the available display area for each character amounting to 65mm x 38mm = 2740 sq.mm.

Fig. 6 shows diagrammatically a large area display incorporating a number of liquid crystal display devices each as shown in Fig. 4 mounted side by side in rows one above the other.   A box-like support structure 10 supports five rows 11,12,13,14 and 15, each row containing ten devices 16 each as shown in Fig. 4.   Thus each row is capable of generating twenty characters.   The support structure 10 incorporates the control electronics (not shown) for running and updating the display and a pair of fluorescent tubes 17 and 18 run the length of the rows and provide the back-lighting for the displays.

CLAIMS:-

1.        An electro optic flat panel display device for providing an alpha-numeric character display, and comprising:

(a)        a first sheet having an inwardly facing surface;

(b)        a plurality of pixel-forming electrodes on said surface of substantially triangular shape;

(c)        a second sheet overlying the first sheet and having a common electrode overlying a plurality of said pixel-forming electrodes;

(d)        a perimeter seal securing together the sheets;

(e)        a liquid crystal material between the sheets;

(f)        characterised in that said pixel-forming electrodes (p) are arranged in rectangular groups (G), there being four to a group, in that the groups (G) are arranged as a spaced apart dot matrix such that the spacing (S) between adjacent groups (G) is substantially greater than the gaps (s) between adjacent electrodes (p) of a group (G), whereby to produce the effect of a lower order matrix from a higher order one; in that connection tracks (T) are provided on said surface of said first sheet (1) extending from edge connections (2,3,4 and 5) of said first sheet (1) to individual electrodes (p) and only between adjacent groups (G) of electrodes.

2.        A device as claimed in claim 1, characterised in that the matrix is a five-by-three matrix (Fig. 2A).

3.        A device as claimed in claim 1 or claim 2, characterised in that the spacing (S) between adjacent groups is about 3mm and the spacing (S) between adjacent pixel-forming electrodes of a group is in the range 0.2 to 0.3mm.

4.        A device as claimed in claim 1 or claim 2, characterised in that the spacing between said first (1) and second sheets lies in the range 5 to 25 microns.

5.      A device as claimed in claim 1, characterised in that said first sheet (1) extends beyond said perimeter (7) to provide said electrical connections (2,3,4,5) to provide said electrical connections (2,3,4,5) beyond said perimeter seal.

6.      A device as claimed in any preceding claim, characterised in that two such displays are provided side by side (Fig. 4) on said first sheet, and spaced apart by an amount equal to the character spacing produced when two such devices are mounted side by side to form part of a large area display.

7.      A large area display characterised by comprising a plurality of devices each as claimed in any preceding claim, mounted side by side in the support structure (10), and including electric lighting apparatus (17,18) for back-lighting the display devices.

8.      A direct drive electro-optic flat panel display device providing a dot matrix display for alpha-numeric characters, characterised in that the matrix is five high by three wide (Fig. 2A), that each dot is rectangular and comprises a group (G) of triangular pixel-forming elements (p), that the spaces (S) between the dots is substantially larger than the spaces (s) between elements of a group, and that connection tracks extend from individual elements to edge regions of the device along routes which only pass through the spaces between the dots.

## Fig.1A.

## B.

## C.

## Fig.3.

Fig.2A.  B. 2/4  C.

0146285

0146285

**Fig.4.**

**Fig.6.**

Fig. 5.

0146285

4/4